## Europäisches Patentamt
## European Patent Office
## Office européen des brevets

(19)

(11) Veröffentlichungsnummer : **0 190 402**
**B1**

(12) # EUROPÄISCHE PATENTSCHRIFT

(45) Veröffentlichungstag der Patentschrift :
**02.03.88**

(21) Anmeldenummer : **85113581.4**

(22) Anmeldetag : **25.10.85**

(51) Int. Cl.⁴ : **F 16 C 13/06, B 23 B 19/02,
B 23 Q 23/00, B 23 Q 5/40**

(54) **Vorrichtung zum Abstützen von Spindeln.**

(30) Priorität : **02.11.84 DE 3440039**

(43) Veröffentlichungstag der Anmeldung :
**13.08.86 Patentblatt 86/33**

(45) Bekanntmachung des Hinweises auf die Patenterteilung : **02.03.88 Patentblatt 88/09**

(84) Benannte Vertragsstaaten :
**AT BE CH DE FR GB IT LI NL**

(56) Entgegenhaltungen :
**DE-B- 1 243 496
DE-C-   468 323
DE-U- 6 922 062
DE-U- 8 117 878
GB-A- 1 330 484
US-A- 4 160 569
US-A- 4 416 492**

(73) Patentinhaber : **DR.-ING. RUDOLF HELL GmbH
Grenzstrasse 1-5
D-2300 Kiel 14 (DE)**

(72) Erfinder : **Gössner, Matthias
Meisenweg 8
D-2427 Malente (DE)**

EP 0 190 402 B1

## Beschreibung

Vorrichtung zum Abstützen von Gewindespindeln.

### Technisches Gebiet

Die vorliegende Erfindung betrifft eine Vorrichtung zum Abstützen von Gewindespindeln zur Verhinderung des Durchhangs durch das Eigengewicht der Spindel und/oder Durchbiegung, die aus einem von oben in die Spindel eingreifenden Mutternsegment entstehen würde ; die erfindungsgemäßen Stützelemente sind weitgehend wartungsfrei, selbstfindend und stützen die Spindel auf Rollen, so daß keine Gleitreibung auftritt.

### Zugrundeliegender Stand der Technik

Bei Maschinen der elektronischen Reproduktionstechnik, Werkzeugmaschinen, Verstelleinrichtungen und dergleichen, besteht oft das Problem, daß hochgenaue Spindeln über große Längen freitragend gelagert werden müssen. Durch das Eigengewicht der Spindeln kommt es dabei zu einem Durchgang zwischen den Lagerstellen, der in vielen Fällen die erforderliche Genauigkeit in Frage stellt. Es gibt viele Anwendungsfälle, z. B. bei Gewindespindeln zum Transport von Maschinen-Werkzeugschlitten usw., in denen es genügt, zur Abnahme der Längsbewegung ein Mutternsegment gegebenenfalls unter Federkraft von oben her in die Gewindegänge der Spindel einzurasten. Natürlich erhöhen federnde Einrichtungen nochmals die Durchbiegung der freien Spindel und damit die Ungenauigkeit.

Aus der DE-B-1 243 496 ist eine Lunette zur Bearbeitung zylindrischer Werkstücke bekannt, bei der das Werkstück mittels Rollen gestützt ist. Zwar sind die Rollenböcke, in denen die Rollen gelagert sind, um eine parallel zur Werkstückachse liegende Achse kippbar, so daß sie in der Ebene normal zur Werkstückachse selbstfindend sind ; in der dazu senkrechten Ebene sind sie aber nicht selbsteinstellend, so daß kleine Parallelitätsfehler der Rollenachsen nicht ausgeglichen werden. Auch ist keine der Rollen um ihren Körpermittelpunkt allseitig beweglich, so daß die Rollen automatisch Nichtparallelitäten ihrer eigenen Laufachsen ausgleichen könnten. Die Rollen finden sich somit nicht zwingend zu einer Linienberührung an dem zu stützenden Drehkörper.

Das DE-U-69 22 062 beschreibt eine Rollenlagerung für Transportspindeln, jedoch bezieht sich die Schrift vorwiegend auf Rollenelemente, die das Muttersegment ersetzen. Stützelemente für die Spindel mit Rollen sind zwar erwähnt, aber nicht im einzelnen beschrieben.

Im DE-U-81 17 878 wird eine Spindelabstützung für Gewindespindeln hohen Schlankheitsgrades beschrieben, bei der die Spindel an den Stellen, an denen die Stützlager wirken, unter ihren Gewindekerndurchmesser freigedreht sind. Das Muttersegment wird zur Überbrückung dieser Störstellen so lang ausgeführt, daß es die freigedrehten Stellen überdeckt. Auch hier werden (neben Gleitlagerschalen) Rollen als Stützelemente erwähnt, jedoch ist die Ausführung nicht näher beschrieben.

Keine der bekannten Einrichtungen zeigt Rollen-Stützelemente, die sich bei Zustellung auf die Spindel automatisch zu einer Linienberührung finden.

### Offenbarung der Erfindung

Aufgabe der vorliegenden Erfindung ist die Schaffung einer wartungsfreien Spindelabstützung mit « selbstfindender » Ausrichtung der Stützelemente zur idealen Spindellage mit rollender Reibung.

Die Erfindung erreicht dies mit den in Anspruch 1 genannten Mitteln. Eine vorteilhafte Weiterbildung ist in dem Unteranspruch angeführt.

### Kurze Beschreibung der Zeichnungen

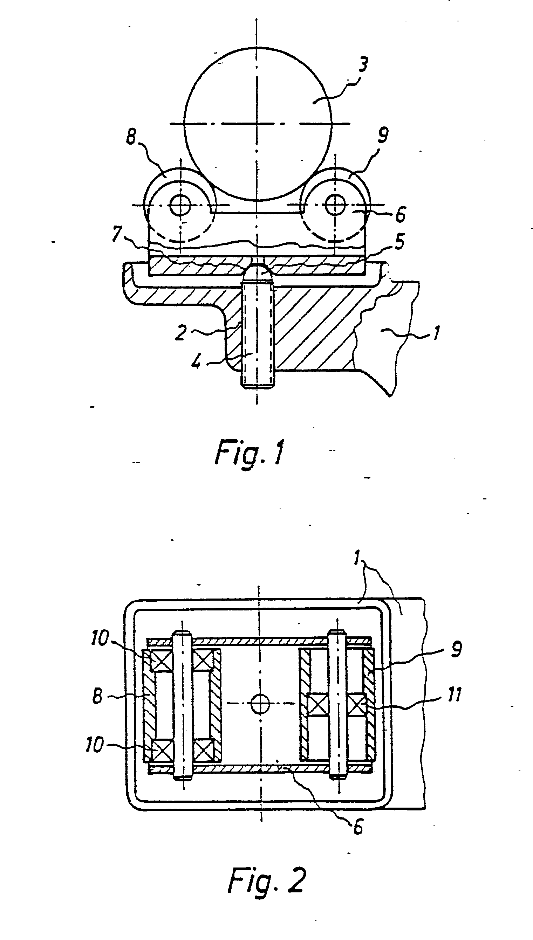

Im folgenden wird die Erfindung anhand der Figuren 1 und 2 näher erläutert. Es zeigen :
Figur 1 : Stützelement in der Seitenansicht
Figur 2 : Stützelement in der Draufsicht

### Bester Weg zur Ausführung der Erfindung

Ein am Maschinengrundkörper befestigter Träger 1 besitzt eine Gewindebohrung 2, die so angeordnet ist, daß sie senkrecht unter der Mittelachse der zu stützenden Spindel 3 liegt. An dieser Stelle sei bereits betont, daß die genannte Lagezuordnung nicht besonders genau sein muß. In die Gewindebohrung 2, die vorzugsweise ein Feingewinde hat, ist ein Gewindestift 4 eingeschraubt, der an seinem der Spindel 3 zugewandten Ende einen halbkugelförmigen Kopf 5 hat, dessen Oberfläche vorteilhafterweise gehärtet und poliert ist. Auf diesem ist ein im wesentlichen U-förmiger Rollenlagerbock 6 mit einer konischen Senkung 7 gelagert, der durch diese Lagerungsart in Grenzen allseitig gelenkig bewegbar ist. In ihm sind 2 Rollen, 8 und 9, so gelagert, daß ihre Achsen im wesentlichen parallel zueinander und zur Achse der zu stützenden Spindel 3 liegen. Dabei ist die Rolle 8 möglichst spielfrei — etwa durch zwei Wälzlager 10 in ihren Stirnseiten — gelagert, während die Rolle 9 so gelagert ist, daß sie um ihren Körpermittelpunkt allseitig kleine Kippbewegungen ausführen kann. Das kann z. B. dadurch bewirkt werden, daß in ihrer Mitte ein einzelnes Rillenkugellager 11 angeordnet ist, das ja ein gewisses Kippspiel hat. Auch ein Gleitlager mit großzügiger Passung, eventuell sogar mit balliger Lauffläche, oder ein elastisches Zwischenglied in der Lagerung wären denkbar.

Die Wirkweise ist folgende :

Man bewegt den Rollenlagerbock 6 bei der Montage durch Anziehen des Gewindestiftes 4 soweit, daß die feste Rolle 8 sich zunächst gegen die Spindel anlegt. Beim Weiterdrehen kippt der Rollenlagebock 6 um den Kugelkopf 5 soweit, daß auch die Rolle 9 zu einer Linienberührung mit der Außenfläche der Spindel 3 kommt. Kleine Ungenauigkeiten gleichen sich dabei durch das Spiel der Lagerung der Rolle 9 aus, so daß in jedem Falle beide Rollen achsparallel zur Spindel 3 liegen und Linienberührung mit dieser haben. Danach werden die Stützelemente soweit angezogen, daß der Durchhang kompensiert ist. In dieser Lage wird der Gewindestift 4 fixiert. Die Fixierung ist in den Figuren nicht dargestellt und kann etwa durch eine Kontermutter oder durch Schlitzen des Mutterngewindes und eine Klemmschraube bewirkt werden.

Das Kippspiel der Rolle 9 darf nicht beliebig groß sein, wie es etwa bei Anwendung eines Pendellagers der-Fall wäre. Das Spiel muß einerseits groß genug sein, um kleine Fertigungsungenauigkeiten auszugleichen, andererseits aber so begrenzt werden, daß die Rolle nicht in der Ebene ihrer Berührungslinie soweit kippen kann, daß die Linienberührung in eine unerwünschte Punktberührung übergeht. Theoretisch ist dies bei jeder Nichtparallelität der Achsen der Fall, jedoch zeigt die Praxis, daß der Tragbildfehler von zweiter Größenordnung klein ist, selbst wenn der zugelassene Kippfehler in einer Größenordnung liegt, bei der Fertigungsungenauigkeiten mit Sicherheit kompensiert werden konnen.

Gewerbliche Verwertbarkeit

Die Erfindung findet Anwendung bei Geräten der elektronischen Reproduktionstechnik sowie bei Werkzeugmaschinen, Meßeinrichtungen etc. Sie kann überall da eingesetzt werden, wo lange Gewindespindeln hohen Schlankheitsgrades aus Genauigkeitsgründen abgestützt werden müssen.

Patentansprüche

1. Vorrichtung zum Abstützen langer Gewindespindeln (3) zwecks Verhinderung des Durchhangs der Spindeln durch ihr Eigengewicht, wobei unter dem freitragenden Teil der Spindel mindestens ein mit Stützrollen (8, 9) versehenes Stützelement angeordnet ist, das die Spindel an ihrem Außendurchmesser stützt, dadurch gekennzeichnet, daß

a) am Grundkörper (1) der Maschine, zu der die Spindel gehört, Träger angebracht sind, die einen höhenverstellbaren Kugelkopf (5) unterhalb der Spindelachse aufweisen,

b) auf dem Kugelkopf (5) ein um drei Achsen gelenkig bewegbarer im wesentlichen U-förmiger Rollenträger (6) angeordnet ist, in dem zwei Stützrollen (8, 9) so gelagert sind, daß ihre Drehachsen parallel zur Spindelachse liegen,

c) die erste Rolle (8) spielfrei gelagert ist, während die zweite Rolle (a) um ihren Körpermittelpunkt allseitig kippbar gelagert ist,

d) Mittel zur Begrenzung der Kippbewegung der zweiten Rolle vorhanden sind.

2. Vorrichtung nach Anspruch 1, dadurch gekennzeichnet, daß die zweite Rolle mittels eines einzelnen in der Mitte ihrer Länge angeordneten Rillenkugellagers (11) gelagert ist, wobei dessen normales Spiel die allseitig kippbare Lagerung und die Begrenzung der Kippbewegung bewirkt.

Claims

1. Device for supporting long threaded spindles (3) for the purpose of preventing sagging of the spindles caused by their intrinsic weight, at least one support element (6) supporting the spindle on its external diameter and provided with supporting rollers (8, 9) being situated under the self-supporting portion of the spindle, characterized in that :

a) carriers which comprise a vertically adjustable ball head (5) below the spindle axis are installed on the base member (1) of the machine to which the spindle belongs,

b) a roller carrier (6), which is substantially U-shaped and movable articulatedly around three axes, and in which two support rollers (8, 9) are mounted that their axes of rotation lie parallel to the spindle axis, is situated on the ball head (5),

c) the first roller (8) is mounted without play, whereas the second roller (9) is arranged to be tiltable in all directions around its corporeal centre,

d) means are present, for limiting the tilting movement of the second roller.

2. Device according to claim 1, characterized in that the second roller is installed by means of a single grooved ball bearing (11) situated at the middle of its length, of which the normal play produces the omnilaterally tiltable mounting and the limitation of the tilting movement.

Revendications

1. Dispositif pour supporter de longues broches filetées (3), en vue d'empêcher le fléchissement de ces broches sous leur propre poids, au moins un élément de support (6) muni de rouleaux de support (8, 9) étant disposé sous la portée libre de la broche, cet élément soutenant la broche à son diamètre extérieur, dispositif caractérisé en ce que :

a) sur la structure de base (1) de la machine à laquelle appartient la broche, sont rapportés des supports qui comportent au-dessous de l'axe de la broche une tête sphérique (5) réglable en hauteur,

b) sur la tête sphérique (5) est disposé un support de rouleaux essentiellement en forme de U (6), mobile par articulation autour de trois axes, sur lequel deux rouleaux de support (8, 9) sont montés de façon que leurs axes de rotation soient parallèles à l'axe de la broche.

c) le premier rouleau (8) est monté sans jeu, tandis que le second rouleau (9) est monté de façon à pouvoir basculer de tous côtés autour du centre de sa structure.

d) des moyens sont prévus pour limiter le basculement du second rouleau.

2. Dispositif selon la revendication 1, caractérisé en ce que le second rouleau est monté au moyen d'un unique palier rainuré à billes (11) disposé au milieu de sa longueur, et dont le jeu normal assure le basculement de tous côtés et la limitation de ce basculement.

Fig. 1

Fig. 2